# DEMANDE DE BREVET EUROPEEN

(11) **EP 0 854 464 A1**
(43) Date de publication de la demande: **22.07.1998**
(21) Numéro de dépôt: 97121934.0
(22) Date de dépôt: 12.12.1997
(51) Int. Cl.: G09B 23/32, A43D 1/02

(54) **Outil pédagogique**

(30) Priorité: 18.12.1996 FR 9616019
(71) Demandeur: Salomon S.A., 74370 Metz-Tessy (FR)
(72) Inventeur: Bonaventure, Laurent, 74960 Cran-Gevrier (FR)

(57) **Abrégé**

Outil pédagogique, destiné à mettre en évidence et expliquer, d'une part, la position relative de l'extrémité d'un membre inférieur (4) d'un individu dans une chaussure (6) en tenant compte de la morphologie typique que peut présenter l'extrémité dudit membre inférieur (4), et d'autre part, l'incidence possible de cette morphologie typique sur la position relative de la chaussure (6).

Cet outil se caractérise en ce que le contour extérieur de l'extrémité du membre inférieur (4) est matérialisé par au moins deux éléments (10-12) articulés l'un par rapport à l'autre autour d'un axe (13), l'un des éléments représentant la jambe (10) et l'autre le pied (12), et en ce que l'enveloppe représentant la paroi de la chaussure (6) est au moins partiellement en relief par rapport au support plan (2).

Les éléments articulés représentant le contour de l'extrémité du membre inférieur (4) et l'enveloppe représentant la paroi de la chaussure (6) constituent l'équivalent d'une maquette (3), et l'association de cette dernière avec le support plan (2) éventuellement pourvu de moyens de repérage (24, 24') constitue l'outil pédagogique.

## Description

La présente invention concerne un outil pédagogique tel qu'un tableau de démonstration destiné à mettre en évidence, d'une part, la position relative de l'extrémité d'un membre inférieur d'un individu, comprenant la jambe, la cheville et le pied, dans une chaussure en tenant compte de la morphologie typique que peut présenter l'extrémité dudit membre inférieur, et d'autre part, de l'incidence possible de cette morphologie typique sur la position relative de la chaussure, ce moyen comportant au moins un support plan sur lequel est figuré au moins approximativement le contour extérieur de la jambe, de la cheville et du pied par rapport à une enveloppe représentant, vue en coupe, la paroi adjacente d'une chaussure.

Parmi les outils pédagogiques connus de ce type, on peut citer par exemple les tableaux synoptiques ou panneaux plats de science naturelle et science humaine qui se trouvent le plus souvent dans les établissements d'enseignement. Sur ces tableaux sont portées des données et/ou des renseignements disposés en lignes et en colonnes d'une manière claire et ordonnée, souvent figurée, pour faciliter la consultation ; en effet, ces tableaux synoptiques comportent habituellement une figure pour chaque type morphologique que peut présenter l'extrémité d'un membre inférieur. Ils exposent ainsi, nécessairement, une multitude d'illustrations accompagnées de descriptifs correspondants pour présenter au moins les principaux types morphologiques, et sont par conséquence de dimensions relativement importantes. De plus, s'agissant de situer et d'apprécier ces types morphologiques par rapport à une enveloppe telle que la paroi d'une chaussure, il s'avère que ces tableaux synoptiques doivent en outre être commentés afin que le public intéressé puisse comprendre la relation à faire, et quelles sont les adaptations techniques envisageables si besoin est.

Comme cela ressort à l'évidence, les outils pédagogiques que l'on trouve dans les établissements d'enseignement sont donc relativement complexes, exigent un public avisé sinon spécialisé, et prennent une place considérable les rendant peu pratiques pour être emmenés avec soi et exposés dans différents lieux. Par ailleurs, ils ne permettent pas de comprendre aisément les interactions entre une morphologie spécifique d'un membre inférieur et une enveloppe extérieur donnée.

D'autres outils pédagogiques du même type, très largement répandus notamment dans le secteur des industries des sports d'hiver, consistent en des manuels dits "techniques". Dans ces manuels techniques, et en particulier dans ceux relatifs aux chaussures de ski, on trouve généralement une explication succincte des différents types morphologiques de pieds et quelques techniques d'adaptation d'une chaussure en fonction de ceux-ci, et/ou en fonction d'un effet particulier que l'on veut produire lors de l'usage de la chaussure. Ces manuels techniques se révèlent nécessaires pour l'éducation des distributeurs et détaillants, et d'une manière générale de tout public amené à intervenir sur les chaussures pour parfaire leur ajustement aux pieds de l'utilisateur, et pour adapter éventuellement certaines de leurs caractéristiques techniques avec le niveau de pratique sportive dudit utilisateur. En fait, les outils pédagogiques constitués par de tels manuels techniques présentent sensiblement les mêmes renseignements et explications que l'on trouve sur les tableaux synoptiques, mais cela sous un format maniable, chaque page de ces manuels pouvant être assimilée à une partie d'un tableau synoptique. Par contre, inversement aux tableaux synoptiques qui permettent de voir un ensemble de renseignements d'un seul coup d'oeil, ces manuels techniques nécessitent d'être consultés comme des livres et exigent un sommaire pour faciliter leur consultation selon qu'on recherche, par exemple, un renseignement relatif à la morphologie proprement dite ou un renseignement concernant une technique de calage, d'ajustement,....etc. Ces manuels techniques souffrent par ailleurs du même problème que lesdits tableaux synoptiques, à savoir qu'ils ne permettent pas de faire comprendre aisément les interactions entre une morphologie spécifique d'un membre inférieur et une enveloppe extérieure donnée.

Les outils pédagogiques connus précités se révèlent donc mal adaptés autant pour leur facilité de transport et d'usage que pour leur emploi comme outil pédagogique proprement dit surtout lorsqu'ils sont destinés à vulgariser un ensemble de connaissances scientifiques et techniques relatives à l'extrémité d'un membre inférieur d'un individu par rapport à une chaussure.

La présente invention a pour but de résoudre ces différents inconvénients de manière simple et efficace en proposant un outil pédagogique permettant de faire comprendre d'un seul coup d'oeil un ensemble de données et de renseignements relatifs à la morphologie de l'extrémité d'un membre inférieur d'un individu et de l'incidence de cette morphologie par rapport à une chaussure, cet outil se présentant sous une forme particulièrement bien adaptée pour être transporté en tout lieu, pour être mis en oeuvre sans préparation particulière, et pour expliquer et vulgariser des données et renseignements par une méthode démonstrative.

L'outil pédagogique selon l'invention se présente sous la forme d'un tableau destiné à mettre en évidence, d'une part, la position relative de l'extrémité d'un membre inférieur d'un individu, comprenant la jambe, la cheville et le pied, dans une chaussure, en tenant compte de la morphologie typique que peut présenter l'extrémité dudit membre inférieur, et d'autre part, l'incidence possible de cette morphologie typique sur la position relative de la chaussure par rapport au sol. Ce tableau comporte un support plan sur lequel est figuré au moins approximativement le contour extérieur de la jambe, de la cheville et du pied par rapport à une enveloppe représentant, vue en coupe, la paroi adjacente d'une chaussure. L'outil pédagogique, soit le tableau de démonstration, se caractérise en ce que le contour extérieur de la jambe, de la cheville et du pied est matérialisé par au moins deux éléments articulés entre eux autour d'un axe, l'un des éléments formant la jambe et l'autre le pied, la cheville étant de préférence incluse à l'un de ces deux éléments, et en ce que l'enveloppe représentant la paroi de la chaussure matérialisée sur le support plan est au moins partiellement en relief par rapport à ce dernier, les éléments articulés matérialisant le contour de la jambe, de la cheville et du pied, associés à l'enveloppe représentant la paroi de la chaussure, constituant l'équivalent d'une maquette destinée à présenter et expliquer diverses morphologies de l'extrémité d'un membre inférieur et diverses positions possibles de la chaussure, ainsi que de faire comprendre leurs interactions.

Ainsi conçu, l'outil pédagogique , soit le tableau de démonstration, permet de reproduire, avec une seule maquette comportant au moins deux éléments articulés, plusieurs positions et morphologies de l'extrémité d'un membre inférieur d'un individu, et différentes positions possibles de la chaussure par rapport à celles-ci. On accède par conséquent à un ensemble de données et de renseignements équivalent à celui que peut exposer un tableau synoptique, mais cela sous une forme maniable et didactique grâce à la mobilité des éléments articulés permettant de visualiser et de mieux comprendre les interactions entre lesdits éléments articulés, à savoir entre le membre inférieur et la chaussure. Il ressort à l'évidence que cet ensemble de données peut aisément être élargi en prévoyant, pour représenter la paroi de l'enveloppe de la chaussure, un élément unique monté pivotant sur le support plan, ou deux éléments distincts représentant une partie basse qui entoure le pied et une partie haute qui entoure la jambe, l'un des éléments au moins étant articulé par rapport à l'autre. En effet, par ces dispositions il est permis de faire figurer, sur une même maquette, à la fois plusieurs positions et morphologies de l'extrémité d'un membre comme exposé précédemment, et plusieurs positions possibles de la chaussure ou de parties distinctes constitutives de celle-ci. Encore, en ajoutant des moyens de repérage d'au moins une position initiale relativement constante de la chaussure ou d'un élément représentatif de celle-ci sur le support plan du tableau synoptique, on élargit encore le caractère didactique de ce dernier. Ces moyens de repérage peuvent concerner par exemple la position relative de la chaussure par rapport au sol, qu'elle soit munie ou non d'un appendice matérialisant la section d'un ski ou d'un engin de glisse.

Selon une autre caractéristique, la maquette constituée par les éléments matérialisant, d'une part, le contour de la jambe, de la cheville, du pied, et d'autre part, l'enveloppe représentant la paroi de la chaussure, est accompagnée d'au moins une cale, voire d'un jeu de cales, destinée à caler et à maintenir dans une position déterminée au moins l'un desdits éléments par rapport à l'autre. Ceci permet de visualiser et expliquer parfaitement l'incidence des réglages de l'un des éléments sur l'autre élément.

Selon un mode de réalisation préféré, l'outil pédagogique comporte sur un même support plusieurs maquettes reproduisant approximativement le contour de la jambe, de la cheville et du pied par rapport à l'enveloppe représentant la paroi de la chaussure, chaque maquette étant relative à une morphologie typique de la jambe, de la cheville et du pied, vue dans un plan vertical et transversal ou vertical et longitudinal. Dans un tel mode de réalisation de l'outil, il est ainsi possible d'exposer et de faire comprendre sur un support de dimensions restreintes quasiment tous les types morphologiques de l'extrémité d'un membre inférieur avec leur incidence sur le port d'une chaussure, ainsi que diverses techniques de calage et d'adaptation de cette dernière, ou d'une partie seulement, par rapport à ladite extrémité. On obtient ainsi un outil pédagogique extrêmement complet car il permet de faire comprendre et donner une vue générale sur quasiment tous les cas de figures qui peuvent se présenter sur le plan de la morphologie et de l'incidence de ceux-ci par rapport à une chaussure. A cet effet, chaque maquette présente avantageusement l'extrémité du membre inférieur pourvue d'une chaussure selon des plans de coupe différents. Par exemple, certaines maquettes peuvent illustrer la jambe, la cheville et le pied par rapport à l'enveloppe représentant la paroi de la chaussure dans un plan vertical et transversal passant approximativement par la cheville dans l'axe des malléoles ou dans un plan vertical et longitudinal passant approximativement dans l'axe médian longitudinal de la jambe, la cheville et le pied.

Selon un autre mode de réalisation, l'outil pédagogique est constitué d'au moins deux tableaux contenant, chacun, sur leur support plan au moins une maquette, ces deux tableaux étant reliés bord à bord par une articulation. De la sorte, les tableaux peuvent être rabattus l'un vers l'autre et former l'équivalent d'une valise, ce qui prend peu de place pour leur transport d'un lieu à l'autre. Accessoirement, un dispositif de soutien, tel qu'une béquille par exemple, est associé au tableau constituant l'outil pédagogique afin de maintenir ce dernier dans une position d'utilisation.

L'invention sera du reste mieux comprise en se reportant à la description qui va suivre en référence aux dessins schématiques annexés donnant, à titre d'exemple, quelques modes de réalisation.

La figure 1 montre un outil pédagogique selon l'invention, soit un tableau, comprenant une maquette pourvue des éléments matérialisant l'extrémité d'un membre inférieur et la paroi d'une chaussure sur un support plan, avec un jeu de cales.

Les figures 2 à 6 illustrent différents modes de réalisation des éléments matérialisant la paroi d'une chaussure, vus dans des plans de coupe verticaux, les figures 2 et 6 montrant la paroi dans un plan vertical et transversal passant approximativement par la cheville dans l'axe des malléoles, et la figure 4 montrant la paroi dans un plan de coupe vertical et longitudinal passant approximativement dans l'axe médian longitudinal de la jambe, la cheville et le pied.

Les figures 3 et 5 sont, respectivement, des vues en coupe selon les lignes de coupe III-III et V-V des figures 2 et 4, montrant une disposition des éléments représentant la paroi de la chaussure.

Les figures 7 et 8 illustrent des modes de réalisation des éléments matérialisant le contour de la jambe, la cheville et le pied vus dans un plan vertical transversal en figure 7, et vertical longitudinal en figure 8.

La figure 9 illustre un autre exemple de réalisation d'un outil pédagogique constitué d'un tableau contenant sur un support plan plusieurs maquettes exposant quasiment tous les types morphologiques de l'extrémité d'un membre inférieur avec leur incidence sur le port d'une chaussure.

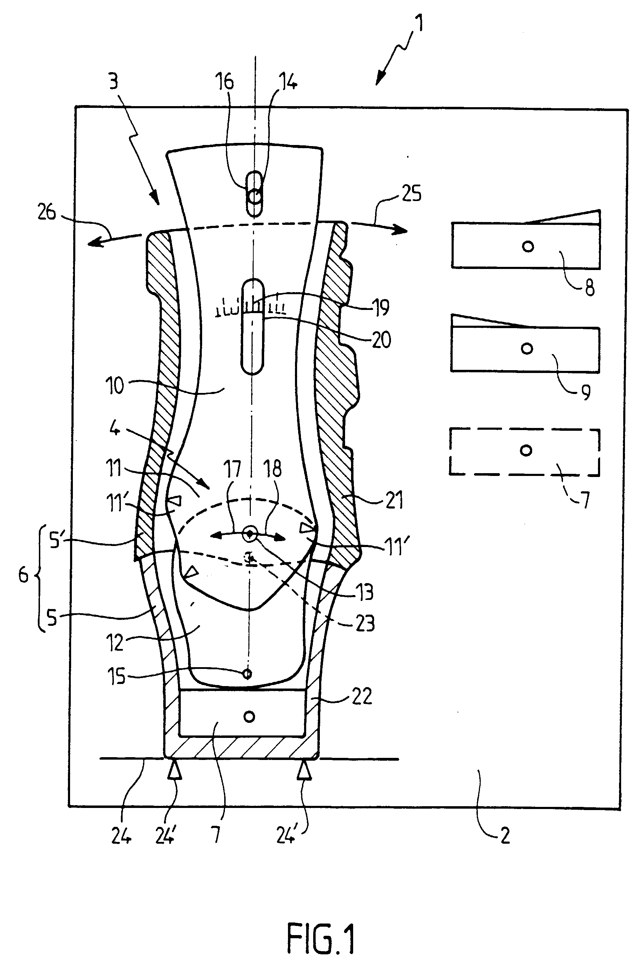

L'outil illustré sur la figure 1 a la forme d'un tableau 1 sur lequel sont figurées l'extrémité d'un membre inférieur 4 d'un individu et une enveloppe représentant la paroi 5, 5', d'une chaussure de ski 6. Ces parties sont représentées vues dans un plan vertical et transversal passant approximativement dans la zone correspondant à la cheville 11 de l'extrémité du membre inférieur 4 dans l'axe des malléoles 11'.

Le tableau 1 comporte un support plan 2, une maquette 3, représentant schématiquement le contour extérieur de l'extrémité d'un membre inférieur 4, et, vue en coupe, une enveloppe représentant la paroi 5, 5', d'une chaussure 6 adjacente audit contour, la paroi 5 s'étendant dans la partie basse de la chaussure et la paroi 5' dans la partie haute de cette dernière. Au moins une cale 7, voire un jeu de cales 7, 8, 9, est disposée de manière amovible sur le support plan 2 pour coopérer, à la demande, avec la maquette 3 en s'interposant notamment entre au moins une partie du contour extérieur de l'extrémité du membre inférieur 4 et au moins une partie de la paroi 5, 5', de la chaussure 6.

Dans cet exemple de réalisation, le contour extérieur de l'extrémité du membre inférieur 4 est matérialisé par deux éléments 10 et 12 reproduisant approximativement l'un, 10, la jambe avec dans son prolongement la cheville 11, et l'autre, 12, le pied. Ces éléments 10 et 12 sont reliés entre eux au moyen d'une articulation 13 située dans la zone de la cheville 11, entre les malléoles 11', et sont par ailleurs reliés au support plan 2 au moyen de pivots 14 et 15, le pivot 15 étant rattaché à l'élément 12, et le pivot 14 à l'élément 10. Ces pivots 14 et 15 sont fixés sur le support plan 2 et disposés sur les éléments 10 et 12 de part et d'autre de l'articulation 13 qui, pour une position, est alignée sur ceux-ci.

Dans cet exemple de réalisation de la figure 1, le pivot 15 est positionné sur l'élément 12 à l'endroit correspondant à la base du talon du pied, et le pivot 14 sur l'élément 10 dans la zone de la jambe qui débouche de [`enveloppe de la chaussure 6, une lumière oblongue 16 obtenue sur l'élément 10 étant destinée à permettre un déplacement translatif en direction longitudinale de ce dernier simultanément à son pivotement. Le contour extérieur de l'extrémité du membre inférieur 4 ainsi matérialisé avec les éléments 10 et 12 permet de figurer, de manière démonstrative, la position transversale relative du pied par rapport à la jambe et les déviations possibles de ce dernier, donc plusieurs morphologies, par simple pivotement desdits éléments 10 et 12 sur leurs pivots 14 et 15, l'articulation 13 permettant leur déplacement simultané dans un plan parallèle au support plan 2, tel qu'indiqué par les flèches 17 et 18. Avantageusement, des moyens de repérage 19, 20, constitués par exemple par une échelle de graduation 19 réalisée sur le support plan 2, et par une fenêtre de lecture 20 obtenue sur l'élément de jambe 10, sont associés aux éléments 10, 12, matérialisant le contour de l'extrémité du membre inférieur 4 pour permettre une mesure angulaire de la déviation de l'axe longitudinal de la jambe pour différentes morphologies que l'on veut montrer. Encore, d'autres moyens de repérage 21 tels que des marquages fléchés sont réalisés sur l'élément 10 pour mettre en évidence des zones sensibles de la cheville 11, telles les épiphyses des os de la jambe constituant les malléoles 11'.

Concernant l'enveloppe représentant la paroi 5, 5', de la chaussure 6, celle-ci est constituée de deux éléments 21, 22, qui illustrent, l'un, 21, la tige ou collier de la chaussure qui entoure le bas de jambe du porteur de la chaussure, et l'autre, 22, la base de coque, munie d'une semelle, qui entoure le pied dudit porteur. Ces éléments 21, 22, sont montés pivotants sur le support 2 autour du pivot 23 qui se trouve placé sous les éléments 10, 12, matérialisant le contour de l'extrémité du membre inférieur 4, sensiblement en correspondance de l'articulation 13 desdits éléments 10, 12. Les éléments 21, 22, se trouvent par ailleurs placés en relief par rapport au support plan 2.

Des moyens de repérage 24, 24', constitués par un trait rectiligne 24 et par deux triangles 24' figurent, respectivement, la surface du sol ou de l'organe de glisse, tel qu'un ski fixé à la chaussure, par rapport à l'élément 22 représentant la base de coque avec sa semelle, et les points d'appui latéraux extrêmes de cette dernière par rapport au sol. Par ces dispositions, les éléments 21, 22, qui représentent les parties constitutives principales de la chaussure 6, peuvent être déplacés en rotation dans un plan parallèle au support 2, l'un par rapport à l'autre, l'un 22, par rapport aux moyens de repérage 24, 24', et également, l'un et l'autre 21 et 22 par rapport aux éléments 10, 12, matérialisant l'extrémité du membre inférieur 4. La maquette 3 comportant à la fois des éléments articulés 10, 12, matérialisant l'extrémité du membre inférieur 4, et les éléments articulés 21, 22, matérialisant la paroi 5, 5', de l'enveloppe de la chaussure 6, permet ainsi de figurer plusieurs morphologies typiques de l'extrémité d'un membre inférieur 4 d'un individu et différentes positions possibles de la chaussure 6 par rapport à celle-ci et par rapport au sol 24.

Cependant, du fait que les composants de la maquette 3 présentent l'extrémité du membre inférieur 4 vue dans un plan vertical et transversal passant dans la zone de la cheville 11 et dans l'axe des malléoles 11', les types de morphologies qu'elle peut montrer concernent plus particulièrement les déviations du pied 12 et l'inclinaison de la jambe 10. Il s'agit par exemple des déviations du pied 12 dites "pied varus" et "pied valgus", et les inclinaisons latérales de la jambe 10 indiquées par les flèches 25 et 26 qui découlent en fait des déviations du genou (non représenté) dites "genou varus" et "genou valgus". Il n'en reste pas moins que l'outil pédagogique comprenant le support plan 2, la maquette 3, les moyens de repérage 19-20, 24-24', et au moins une cale 7, 8 ou 9, constitue sous une forme relativement compacte et maniable l'équivalent d'un tableau apte non seulement à fournir un ensemble de données et de renseignements sur des morphologies typiques, mais également à montrer leur incidence sur le port d'une chaussure et les appuis de celle-ci sur le sol. Cet ensemble est avantageusement exploitable par les distributeurs et les détaillants de chaussures de sport, notamment de chaussures de ski, par exemple en vue de procéder à des adaptations techniques ou simplement pour expliquer à l'utilisateur l'intérêt de telles adaptations techniques.

Il est évident que les composants d'une maquette comme la maquette 3 qui vient d'être décrite peuvent être réalisés selon d'autres formes et structures et être présentés selon d'autres plans de coupe de l'extrémité du membre inférieur 4, par exemple selon un plan vertical et longitudinal.

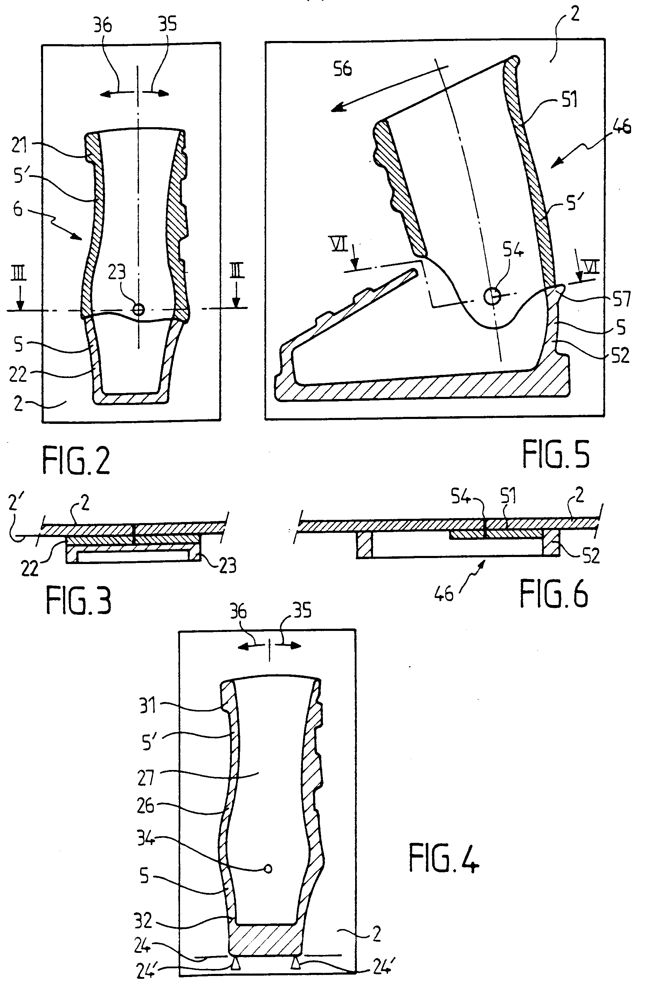

A titre d'exemples les figures 2 à 6 qui suivent illustrent différents modes de réalisation de l'enveloppe représentant la paroi 5, 5', d'une chaussure de ski, vue dans un plan vertical et transversal sur les figures 2 et 4, et dans un plan vertical et longitudinal sur la figure 5.

Sur la figure 2, la chaussure de ski 6 est matérialisée par des éléments 21 et 22 similaires à ceux décrits en référence à la figure 1, lesquels sont montés sur un pivot 23 les reliant au support plan 2, tel que visible sur la figure 3. Par contre, dans cette version, seul l'élément 21 illustrant la tige ou collier de la chaussure est prévu pivotant autour du pivot 23, son déplacement s'effectuant comme précédemment dans un plan 2' parallèle au support plan 2. Ainsi conçue, l'enveloppe de la chaussure 6 est utilisable pour expliquer l'effet des inclinaisons latérales possibles de la tige ou collier (élément 21) de la chaussure 6 par rapport à la base de coque (élément 22) dans des directions 35 et/ou 36 correspondant sensiblement aux inclinaisons latérales possibles de la jambe 10 indiquées par les flèches 25 et 26 sur la figure 1.

Dans la version représentée à la figure 4, la chaussure 26 est matérialisée par un seul élément 27 comprenant une partie basse 32 figurant la base de coque de la chaussure, et une partie haute 33 figurant la tige ou collier de cette dernière, un pivot 34 assurant sa liaison au support plan 2 de manière pivotante. Ce pivot 34 est situé approximativement au milieu de la partie basse 32 et à une hauteur correspondant à peu près à celle qu'occuperait la cheville 11 de l'extrémité du membre inférieur 4 décrit en figure 1. De la sorte, l'élément 27 peut servir à expliquer l'effet de différentes inclinaisons latérales de la chaussure 26 considérée globalement dans des directions indiquées par les flèches 35 et 36 par rapport au sol figuré par des moyens de repérage 24, 24'.

Encore, selon une autre version représentée aux figures 5 et 6, la chaussure 46 est vue en coupe dans un plan vertical et longitudinal (figure 5) et son enveloppe est matérialisée par deux éléments 51 et 52, l'élément 51 figurant la tige ou collier, et l'élément 52 figurant la base de coque. Un pivot 54 relie de manière pivotante l'élément 51 au support plan 2 et permet audit élément 51 de basculer vers l'avant, tel qu'indiqué par la flèche 56, un appendice 57 venu de l'élément 52 et situé dans la zone correspondant au talon de la chaussure 46 empêchant tout pivotement dudit élément 51 vers l'arrière au delà d'une certaine position angulaire déterminée. Dans cette version figurant la chaussure 46 sur un support plan 2 il est possible de montrer l'effet sur la jambe de différentes inclinaisons vers l'avant de la tige (élément 51) par rapport à la base de coque (élément 52).

Dans ces différentes réalisations qui viennent décrites, l'enveloppe représentant la paroi 5, 5', d'une chaussure de ski 6, 26, 46, est matérialisée par des éléments 21, 22, 31, 32, 51, 52, qui sont rapportés sur le support plan 2, donc qui se présentent en relief par rapport à ce dernier de façon à former une butée vis à vis de l'élément représentant la jambe située à l'intérieur de l'enveloppe. Selon d'autres réalisations, non représentées, une partie de l'enveloppe est simplement dessinée sur le support plan 2 soit parce qu'elle n'est pas destinée à être déplacée, soit parce qu'elle constitue un moyen de repérage d'au moins une position initiale d'un élément 21, 22, 31, 32, 51, 52, la recouvrant et qui est monté pivotant. De préférence, les éléments 21, 22, 31, 32, 51, 52, qui sont destinés à être déplacés en pivotement sont dotés de bordures de sorte que les éléments articulés 10, 11, 12, matérialisant le contour de l'extrémité du membre inférieur 4 se trouvent au moins partiellement logés dans l'enveloppe et libres d'être déplacés jusqu'à un certain point relativement à cette dernière ou avec elle, dans un plan parallèle au support 2.

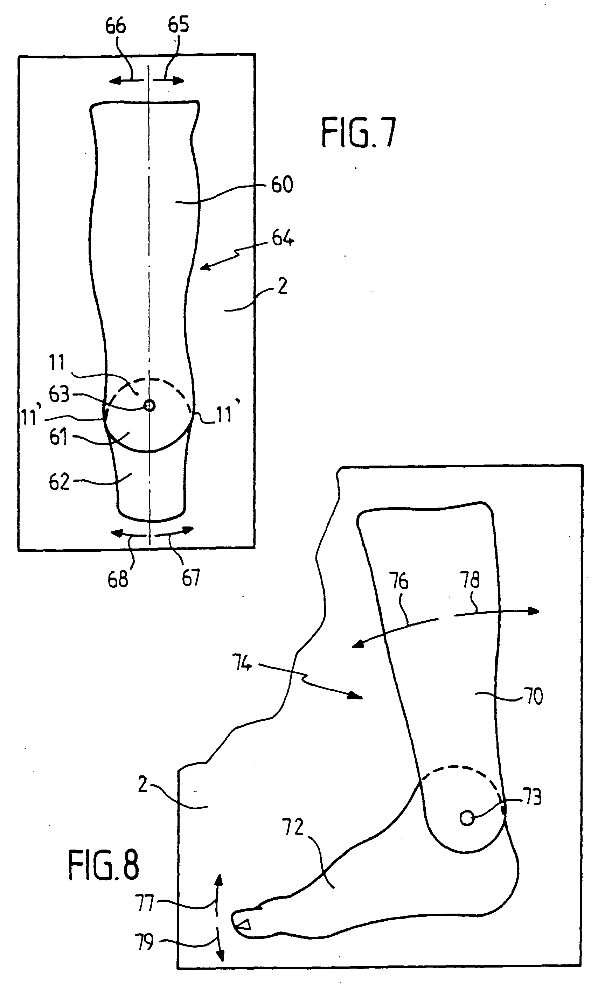

Concernant le contour de l'extrémité du membre inférieur 4, le et/ou les éléments le matérialisant peuvent également être réalisés selon d'autres formes et structures que celles qui sont décrites en référence à la figure 1. Ainsi, par exemple, en figure 7 l'extrémité du membre inférieur 64, vue en coupe dans un plan vertical et transversal passant approximativement par la zone correspondant à la cheville 11 par l'axe des malléoles 11', comporte deux éléments 60 et 62 qui sont montés pivotants sur le support plan 2 autour d'un pivot 63. Ces éléments 60 et 62 se superposent partiellement dans la zone correspondant à la cheville 61 et sont déplaçables selon des directions latérales 65-66 et 67-68 indépendamment l'un de l'autre, et l'un par rapport à l'autre.

Dans cette structure, il est possible d'expliquer et de montrer les effets de la position relative de la jambe (élément 60) par rapport au pied (élément 62), ce qui correspond à des déviations du genou dites "genou varus" et "genou valgus", et la position relative du pied (élément 62) par rapport à la jambe (élément 60), ce qui correspond à des déviations du pied dites "pied varus" et "pied valgus".

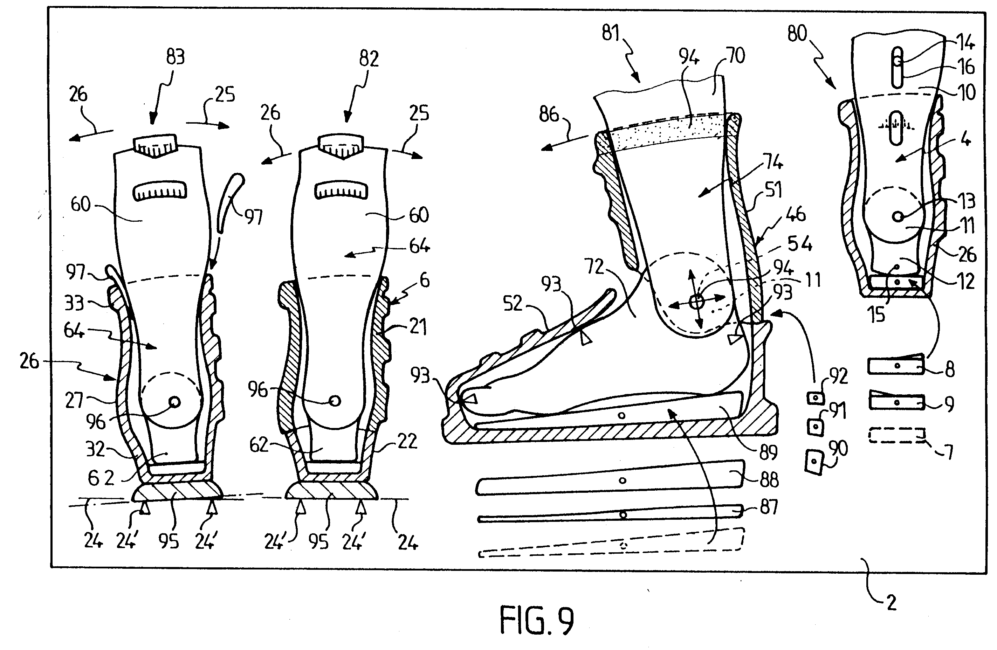

Dans l'exemple représenté à la figure 8, l'extrémité du membre inférieur 74 est vue selon un plan vertical et longitudinal passant approximativement dans l'axe médian longitudinal de la jambe, la cheville et le pied, et est constituée d'un élément 70 illustrant une jambe, et d'un élément 72 illustrant un pied, reliés ensemble au support plan 2 au moyen d'un pivot 73 situé approximativement dans la zone correspondante à l'articulation de la cheville, voire des malléoles. Ce mode de réalisation permet de montrer et d'expliquer les mouvements du pied (élément 72) et/ou de la jambe (élément 70) et leurs effets dans le plan longitudinal dit "sagittal". Par exemple, en déplaçant seulement la jambe 70 vers l'avant tel qu'indiqué par la flèche 76, on peut montrer que ce mouvement induit la flexion dorsale du pied 72. On peut aussi montrer qu'en déplaçant uniquement le pied 72 vers le haut tel qu'indiqué par la flèche 77, que ce mouvement induit également la flexion dorsale du pied 72. Encore, en déplaçant simultanément la jambe 70 et le pied 72 selon les flèches 76 et 77, ce déplacement induit encore la flexion dorsale du pied 72.

Inversement, en déplaçant la jambe 76 et/ou le pied 72 dans des directions opposées telles qu'indiquées par les flèches 78 et 79, on peut montrer plusieurs mouvements capables d'induire l'extension du pied 72. Comme cela ressort à l'évidence, la simple articulation entre les seuls éléments pied 72 et jambe 70 permet de figurer et d'expliquer de manière démonstrative de nombreux effets résultants de ces différents mouvements.

Bien entendu, le contour matérialisé de l'extrémité d'un membre inférieur 4 tel que décrit en référence aux figures 7 et 8 peut ne pas être fixé sur le support plan 2, notamment dans le cas où il s'étend sur le et/ou les éléments 21-22, 26, 51-52, matérialisant l'enveloppe d'une chaussure 6, 26, 46 (figures 2 à 6), et ainsi coopérer avec pour constituer une maquette comme exposé en référence à la figure 1. Dans ce cas de construction, les pivots 63 et 73 servent alors uniquement d'articulation entre les éléments 60, 62, et 70, 72, qui, de préférence, sont alors maintenus en place dans et/ou sur les éléments 21-22, 26, 51-52, matérialisant l'enveloppe de la chaussure 6, 26, 46, à l'aide d'une pièce de retenue telle qu'une bande de recouvrement que l'on rapporte sur ceux-ci.

Selon un mode de réalisation préféré, représenté à la figure 9, l'outil pédagogique comporte sur un même support plan 2 plusieurs maquettes 80, 81, 82 et 83, reproduisant, chacune, le contour de l'extrémité d'un membre inférieur, respectivement 4, 74, 64, par rapport à l'enveloppe représentant la paroi de la chaussure 26, 46, 6, chaque maquette 80, 81, 82 et 83, étant relative à une morphologie typique vue dans un plan vertical transversal (maquettes 80, 82 et 83), ou vertical longitudinal (maquette 81).

Dans un tel mode de réalisation on dispose en fait d'un tableau permettant de visualiser et d'expliquer sur un support 2 de dimensions restreintes quasiment tous les types morphologiques de l'extrémité d'un membre inférieur 4, 74, 64, avec leur incidence sur le port d'une chaussure 6, 26, 46, ainsi que diverses techniques de calage et d'adaptation de cette dernière en utilisant, selon la maquette concernée, une cale ou un jeu de cales.

A titre d'exemple, la maquette 80 comprenant, d'une part, le contour de l'extrémité d'un membre inférieur 4, matérialisé par les éléments jambe 10, cheville 11 et pied 12, et d'autre part, une enveloppe de chaussure 26, est destinée à mettre en évidence les déviations latérales du pied 12 dites "pied varus" et "pied valgus". Un jeu de cales amovibles 7, 8 et 9, associé à la maquette 80 et disposé sur le support 2, permet de visualiser et expliquer l'assise latérale du pied 12 dans la chaussure compte tenu de sa déviation en utilisant par exemple une cale 7 à bords parallèles, et également l'effet de calage oblique éventuel obtenu en utilisant une cale 8 ou 9 correspondante.

La maquette 81 comprenant, d'une part, le contour de l'extrémité d'un membre inférieur 74 matérialisé par des éléments jambe 70 et pied 72, et d'autre part, une enveloppe de chaussure 46 est destinée à mettre en évidence et d'expliquer, d'une part, l'assise longitudinale du pied 72 dans cette dernière et diverses possibilités de modifier la pente de cette assise, et d'autre part, le calage éventuel de la tige (élément 51) de la chaussure par rapport à la base de coque (élément 52) pour placer la jambe 70 dans une position déterminée d'inclinaison vers l'avant, tel qu'indiqué par la flèche 86.

Cette maquette 81 peut également servir à visualiser et expliquer le déplacement relatif du pied 72 susceptible de se produire dans la chaussure 46 lorsqu'il y a mouvement de flexion de la jambe 70, et les zones de contact sensibles du pied 72 mises en cause par ce déplacement et pouvant générer des problèmes de confort.

A cet effet, des marquages 93 sont apposés sur le pied (élément 72) à l'endroit de ces zones de contact sensibles, et les éléments jambe 70 et pied 72 sont prévus articulés entre eux autour d'une liaison 94 les laissant libres de débattre entre les éléments tige 51 et base de coque 52 de la chaussure 46, l'élément tige 51 étant monté sur un pivot 54 fixé dans le support 2. Dans ce mode de réalisation de la maquette 81, une bande de recouvrement 94 transparente ou opaque est rapportée sur l'élément jambe 70 et fixé de part et d'autre de celui-ci sur l'élément tige 51 de la chaussure 46.

Afin de visualiser et d'expliquer les différentes positions d'assise longitudinale du pied 72 dans la chaussure 46, et les différentes positions d'inclinaison que l'on peut imposer à la jambe 70 en variant le calage de la tige 51, deux jeux de cales amovibles 87, 88, 89 et 90, 91, 92, sont mis à disposition de l'utilisateur de la maquette 81. Ce dernier peut ainsi caler la tige 46 dans une position plus ou moins inclinée vers l'avant, tel qu'indiqué par la flèche 86, en interposant une cale 90, 91 ou 92, plus ou moins grande dans la zone du talon de la chaussure 46 entre la tige (élément 51) et un appendice 57 venu de la base de coque (élément 52).

La maquette 82 comprenant le contour matérialisé de l'extrémité d'un membre inférieur 64 et l'enveloppe d'une chaussure 6 se distingue des maquettes précédentes 3, 80, 81, en ce qu'elle comporte un appendice 95 matérialisant la section d'un engin de glisse tel qu'un ski. Cet appendice 95 est obtenu dans le prolongement de la partie inférieure de l'élément de base de coque 22 illustrant la semelle de ce dernier. Dans ce mode de réalisation de la maquette 82, les éléments de base de coque 22 et tige 21, ainsi que les éléments jambe 60 et pied 62 sont reliés au support plan 2 par l'intermédiaire d'un pivot unique 96. De cette manière, il est possible de montrer à la fois les inclinaisons possibles de la jambe (élément 60) par rapport au pied (élément 62) qui sont dues par exemple à des déviations du genou dites "genu varum" et "genu valgum", et les adaptations possible de la tige (élément 21) de la chaussure en inclinaison transversale telle que selon 26 ou 25 pour conserver ou rétablir l'appui de l'engin de glisse à plat sur le sol figuré par des moyens de repérage 24, 24'.

Dans l'exemple de la maquette 83, on retrouve quasiment tous les composants de la maquette 82, la différence essentielle consistant en la mise en oeuvre d'un élément unique 27 pour matérialiser l'enveloppe de la chaussure 26, cet élément 27 étant monté sur un pivot unique 96. Ainsi conçue, la maquette 83 permet de visualiser et expliquer l'inclinaison latérale que prend la chaussure 26 et donc l'engin de glisse représenté par l'appendice 95 par rapport au sol 24, 24', en fonction de l'inclinaison de la jambe (élément 60) en l'absence d'une adaptation angulaire de la tige (partie haute 33) par rapport à la base de coque (partie basse 32) comme c'est le cas dans la maquette 82. Au moins une cale amovible 97, insérable entre la jambe (élément 60) et l'enveloppe de la chaussure 26 est prévue avec la maquette 83 pour expliquer l'effet de basculement latéral qu'elle est susceptible de produire sur la chaussure 26 en vue, par exemple, de placer en permanence l'engin de glisse 95 de manière sécante par rapport au sol 24, 24', pour une morphologie type de l'extrémité du membre inférieur 4, telle que celle correspondant à un "genu varum" ou un "genu valgum" ou encore "normale".

## Revendications

1. Outil pédagogique, destiné à mettre en évidence et expliquer, d'une part, la position relative de l'extrémité d'un membre inférieur (4, 64, 74) d'un individu, comprenant la jambe (10, 60, 70), la cheville (11) et le pied (12, 62, 72), dans une chaussure (6, 26, 46) en tenant compte de la morphologie typique que peut présenter l'extrémité dudit membre inférieur (4, 64, 74), et d'autre part, l'incidence possible de cette morphologie typique sur la position relative de la chaussure (6, 26, 46), cet outil comportant au moins un support plan (2) sur lequel est figuré au moins approximativement le contour extérieur de la jambe (10, 60, 70), de la cheville (11) et du pied (12, 62, 72) par rapport à une enveloppe représentant, vue en coupe, la paroi adjacente d'une chaussure (6, 26, 46), caractérisé en ce que le contour extérieur de la jambe (10, 60, 70), de la cheville (11) et du pied (12, 62, 72) est matérialisé par au moins deux éléments (10-12, 60-62, 70-72), et en ce que ces éléments sont articulés l'un par rapport à l'autre autour d'un axe (13, 63, 73, 94, 96), l'un des éléments formant la jambe (10, 60, 70) et l'autre le pied (12, 62, 72), la cheville (11) étant incluse à l'un de ces deux éléments, et en ce que l'enveloppe représentant la paroi de la chaussure (6, 26, 46) matérialisée sur le support (2) est au moins partiellement en relief par rapport à celui-ci, les éléments articulés matérialisant le contour de la jambe, de la cheville et du pied associés à l'enveloppe représentant la paroi de la chaussure (6, 26, 46) constituant l'équivalent d'une maquette (3, 80, 81, 82, 83) destinée à présenter et expliquer diverses morphologies de l'extrémité d'un membre inférieur (4) et diverses positions possibles de la chaussure (6, 26, 46) et leurs interactions ou effets relatifs.

2. Outil selon la revendication 1, caractérisé en ce que les éléments articulés matérialisant le contour de la jambe (10, 60, 70), la cheville (11) et le pied (12, 62, 72) sont au moins partiellement logés dans l'enveloppe représentant la paroi de la chaussure (6, 26, 46) et libres d'être déplacés relativement à cette dernière dans un plan parallèle au support (2).

3. Outil selon l'une quelconque des revendications 1 ou 2, caractérisé en ce que le support (2) est pourvu d'un moyen de repérage (24) figurant la surface du sol par rapport à l'enveloppe représentant les parois de la chaussure.

4. Outil selon l'une quelconque des revendications 1 à 3, caractérisé en ce que l'enveloppe représentant la paroi de la chaussure (26) est constituée d'un élément unique (27) monté sur le support (2).

5. Outil selon la revendication 4, caractérisé en ce que l'élément unique (27) est monté pivotant sur le support (2) et en ce que le support (2) comporte des moyens de repérage d'au moins une position initiale de l'élément unique.

6. Outil selon l'une quelconque des revendications 1 à 3, caractérisé en ce que l'enveloppe représentant la paroi de la chaussure (6, 46) est constituée d'au moins deux éléments (21-22, 51-52) qui sont montés sur le support (2), l'un au moins de ces éléments étant articulé par rapport à l'autre dans un plan parallèle au support (2).

7. Outil selon la revendication 6, caractérisé en ce que l'un au moins des deux éléments (21-22, 51-52) de l'enveloppe de la chaussure (6, 46) est articulé autour d'un pivot (23, 54) qui constitue le moyen de montage le reliant au support (2), cet axe (23, 54) permettant leur déplacement dans un plan parallèle au support (2).

8. Outil selon l'une quelconque des revendications 1 à 7, caractérisé en ce que l'enveloppe représentant la paroi de la chaussure (26) est dotée, dans sa partie inférieure (32) illustrant sa semelle, d'un appendice (95) matérialisant la section d'un engin de glisse.

9. Outil selon l'une quelconque des revendications 1 à 8, caractérisé en ce que l'un au moins des éléments matérialisant le contour de la jambe (10, 60), de la cheville (11) et du pied (12) est relié au support par un pivot (13, 15-16, 63, 73, 56) lui permettant de se déplacer dans un plan parallèle à ce dernier.

10. Outil selon l'une quelconque des revendications 1 à 9, caractérisé en ce qu'il comporte sur un même support (2) plusieurs maquettes (80, 81, 82, 83) reproduisant approximativement le contour de la jambe (10, 60, 70), de la cheville (11) et du pied (12, 62, 72) par rapport à l'enveloppe représentant la paroi de la chaussure (6, 26, 46), et en ce que chaque maquette concerne une morphologie typique de la jambe, de la cheville et du pied vue dans un plan vertical.

11. Outil selon l'une quelconque des revendications 1 à 10, caractérisé en ce qu'une maquette (80, 81, 83) au moins est accompagnée d'au moins une cale amovible (7, 8, 9, 87, 88, 89, 90, 91, 92, 97) qui est destinée à caler, dans une position déterminée, au moins l'un des éléments matérialisant le contour de la jambe (10, 60, 70), de la cheville (11) et du pied (12, 62, 72) par rapport à l'enveloppe représentant la paroi de la chaussure (6, 26, 46), et à le maintenir dans cette position.

12. Outil selon l'une quelconque des revendications 1 à 11, caractérisé en ce qu'au moins une maquette (80, 82, 83) illustre, vu dans un plan vertical et transversal, la jambe (10, 60, 70), la cheville (11) et le pied (12, 62, 72) par rapport à l'enveloppe représentant la paroi de la chaussure (6, 26), ce plan passant approximativement par la cheville (11) dans l'axe des malléoles (11').

13. Outil selon l'une quelconque des revendications 1 à 11, caractérisé en ce qu'au moins une maquette (81) illustre, vu dans un plan vertical et longitudinal, la jambe (70), la cheville (11) et le pied (72) par rapport à l'enveloppe représentant la paroi de la chaussure (46), ce plan passant approximativement par la cheville dans l'axe médian longitudinal de la jambe, la cheville et le pied.
